# EUROPÄISCHE PATENTSCHRIFT

(11) **EP 0 707 508 B1**
(45) Veröffentlichungstag und Bekanntmachung des Hinweises auf die Patenterteilung: **29.12.1997**
(21) Anmeldenummer: 95919356.6
(22) Anmeldetag: 28.04.1995
(51) Int. Cl.: B01D 9/00

(54) **VERFAHREN UND VORRICHTUNG ZUR STOFFTRENNUNG DURCH KRISTALLISATION VON SCHMELZEN**
PROCESS AND DEVICE FOR THE SEPARATION OF SUBSTANCES BY CRYSTALLIZATION OF MOLTEN MATERIAL
PROCEDE ET DISPOSITIF POUR LA SEPARATION DE SUBSTANCES PAR CRISTALLISATION DE MATIERES EN FUSION

(30) Priorität: 05.05.1994 DE 4415844
(43) Veröffentlichungstag der Anmeldung: 24.04.1996
(73) Patentinhaber: Santrade Ltd., CH-6002 Luzern (CH)
(72) Erfinder: KÖNIG, Axel, D-70374 Stuttgart (DE); ULRICH, Joachim, D-28203 Bremen (DE); FISCHER, Oskar, CH-9470 Buchs (CH)
(74) Vertreter: Wilhelm, Hans-Herbert, Dr.-Ing.
(86) Internationale Anmeldenummer: EP9501617
(87) Internationale Veröffentlichungsnummer: WO9530466

(56) Entgegenhaltungen:
- EP-A- 0 488 953
- EP-A- 0 492 148
- FR-A- 2 182 168
- US-A- 2 659 761

## Beschreibung

Die Erfindung betrifft ein Verfahren und eine Vorrichtung zur Stofftrennung durch Kristallisation von Schmelzen, bei dem die Schmelze in den Spalt zwischen zwei sich gegenüberliegenden bewegten Wandungen eingebracht wird, die beide kühlbar sind, als Kristallisat an mindestens einer Wandung haften bleibt und mit dieser aus dem Spalt herausgefördert und abgenommen wird.

Ein Verfahren und eine Vorrichtung dieser Art ist aus der DE 40 41 670 C bekannt, bei der zwei endlose Bänder so übereinander gelagert sind, daß ihre einander zugewandten Trums horizontal und parallel zueinander verlaufen. Das untere Band ist dabei etwas länger als das obere ausgebildet und dient mit seinem über das obere Band hinausstehende Teil zur Aufgabe einer Schmelze. Das untere Band, das ein Stahlband ist, wird dabei so temperiert, daß diese Schmelze auf einer Temperatur über ihrem Erstarrungspunkt bleibt. Das obere Band dagegen, das ebenfalls ein Stahlband ist und von innen gekühlt wird, wird auf eine solche Temperatur gebracht, daß sich an ihm eine Kristallisationsschicht bilden kann. Da das obere Band in Berührung mit der Schmelze gebracht wird und entgegengesetzt zu der vom unteren Band geförderten Schmelze läuft, kann die am oberen Band anhaftende Kristallschicht aus dem Spalt herausgefördert und dann im Bereich der Umlenkwalze mechanisch abgenommen werden.

Bei diesem bekannten Verfahren steht nur eine Wandung zur Erzeugung von Kristallisat zur Verfügung, die andere übernimmt Transport- und Temperierungsaufgaben.

Vorteilhaft ist bei solchen Verfahren und Einrichtungen, daß eine kontinuierliche Kristallisatbildung gegenüber Verfahren und Vorrichtungen erreicht wird, die beispielsweise mit vertikalen gekühlten oder erwärmten Wänden von parallel geschalteten Rohren arbeiten, bei denen im Inneren der Rohre ein flüssiges Gemisch als Rieselfilm von oben nach unten läuft, während sich auf der Außenseite der Rohre Kühlmittel befindet. Solche Verfahren und Vorrichtungen können nur diskontinuierlich betrieben werden.

Es ist zur kontinuierlichen Stofftrennung durch Kristallisation aber auch eine Einrichtung bekannt geworden (EP 0 488 953 A1), bei der man ein schräg gestelltes, gekühltes endloses Band verwendet, das an seinem oberen Trum von innen gekühlt ist und über diesem Außentrum mit Beschickungsstellen für ein flüssiges Gemisch oder eine Schmelze versehen ist. Auch bei diesen Einrichtungen erfolgt die Kristallbildung nur an einer Wandfläche und die Neigung des Bandes wird nur dazu ausgenützt, um die Mutterlauge schräg nach unten abführen zu können.

Schließlich ist es aus der FR-A 2 182 168 auch bekannt, aus bewegten Bändern einen senkrechten Schacht zu bilden, in den das flüssige Medium oben eingefüllt wird. Bei dieser Bauart wird der Schacht durch die vier inneren, einen rechteckigen Querschnitt bildenden Trums von vier endlosen Bändern gebildet, die so bewegt werden, daß die einander und dem Schacht zugewandten Trums nach unten bewegt werden. Mindestens zwei gegenüberliegende Bänder sind dabei gekühlt oder beheizt, so daß sich an ihnen Kristalle bilden, die nach unten zu einem Mahlwerk geführt und dort zerkleinert werden. Auch die restliche Flüssigkeit gelangt durch Schwerkraft in den Bereich des Mahlwerkes.

Dadurch kann die Gewinnung der festen Substanzen beeinträchtigt werden.

Der Erfindung liegt demgegenüber die Aufgabe zugrunde ein Verfahren und eine Vorrichtung der eingangs genannten Art noch wirkungsvoller auszugestalten.

Zur Lösung dieser Aufgabe wird bei dem erfindungsgemäßen Verfahren vorgesehen, daß beide Wandungen gleichsinnig und im wesentlichen vertikal nach oben bewegt werden, und daß die Schmelze gegenläufig zu der Bewegung der Wände mit dem daran haftenden Kristallisat von oben in den Spalt eingebracht wird. Durch ein solches Verfahren können beide nach oben bewegten Wände zur Bildung von Kristallisat ausgenützt werden. Die Leistung von nach diesem Verfahren betriebenen Einrichtungen kann daher verdoppelt werden. Dabei wird die Gravitation dazu ausgenutzt, um die Schmelze gegenläufig zu den Wänden zu bewegen. Das Verfahren läßt sich daher, wenn für eine entsprechende Aufwärmung der Schmelze vor dem Eintritt in den Spalt gesorgt ist, in sehr einfacher Weise durchführen.

Eine vorteilhafte Weiterbildung des erfingungsgemäßen Verfahrens besteht darin, daß die Wandungen mit unterschiedlicher Geschwindigkeit bewegt und/oder in der Bewegungsrichtung einer unterschiedlichen Kühlung unterzogen werden. Durch diese Maßnahme wird es möglich, Kristallisat auch bei unterschiedlichen Bedingungen abzunehmen oder die Geschwindigkeit der Kristallbildung gezielt zu beeinflussen.

Zur Durchführung des erfindungsgemäßen Verfahrens wird eine Vorrichtung vorgesehen, die gekennzeichnet ist durch zwei jeweils um Umlenktrommeln geführte endlose Bänder insbesondere aus Metall, deren einander zugewandte Trums etwa vertikal verlaufen und den Spalt bilden, durch Temperiereinrichtungen, die mindestens der von dem Spalt abgewandten Innenseite der Bänder zugeordnet sind und durch eine am oberen Ende des Spaltes angeordnete Zuführeinrichtung für die Schmelze. Dabei kann vorteilhaft vorgesehen werden, daß die Umlenktrommeln in einem Traggestell jeweils so angeordnet sind, daß es möglich ist, die einander zugewandten Trums der Bänder unter einem geringen Winkel zueinander einzustellen, dessen Scheitel unterhalb des Spaltes liegt. Durch diese Ausgestaltung kann der Spalt entgegen der Fließrichtung der Schmelze etwas geöffnet werden, so daß der Dicke der beiden sich an den Bändern bildenden Kristallschichten Rechnung getragen werden kann, zwischen denen gegenläufig von der Zuführeinrichtung aus die Schmelze in den Spalt gebracht werden kann.

Weitere Vorteile und Merkmale ergeben sich aus den Unteransprüchen sowie aus der nachfolgenden Beschreibung von Ausführungsbeispielen für das erfindungsgemäße Verfahren und die dazu geeignete Vorrichtungen, die in den Zeichnungen dargestellt sind. In den Zeichnungen zeigen:
- Fig. 1: eine schematische Darstellung einer erfindungsgemäßen Vorrichtung zur Erläuterung des erfindungsgemäßen Verfahrens,
- Fig. 2: die Vorrichtung der Fig. 1 in ihrer Ausgestaltung mit verschiedenen Kühlzonen,
- Fig. 3: die schematische Darstellung einer anderen Ausführungsform einer erfindungsgemäßen Vorrichtung mit der Möglichkeit des zusätzlichen "Waschens" des Kristallisats,
- Fig. 4: eine schematische Darstellung der Zustandsgrößen der Schmelze, aus der ein Stoff nach dem erfindungsgemäßen Verfahren gewonnen werden soll,
- Fig. 5: die vergrößerte Darstellung des Schnittes nach der Linie V-V in Figur 2 mit der seitlichen Bandabdichtung und
- Fig. 6: eine weitere Variante einer erfindungsgemäßen Vorrichtung.

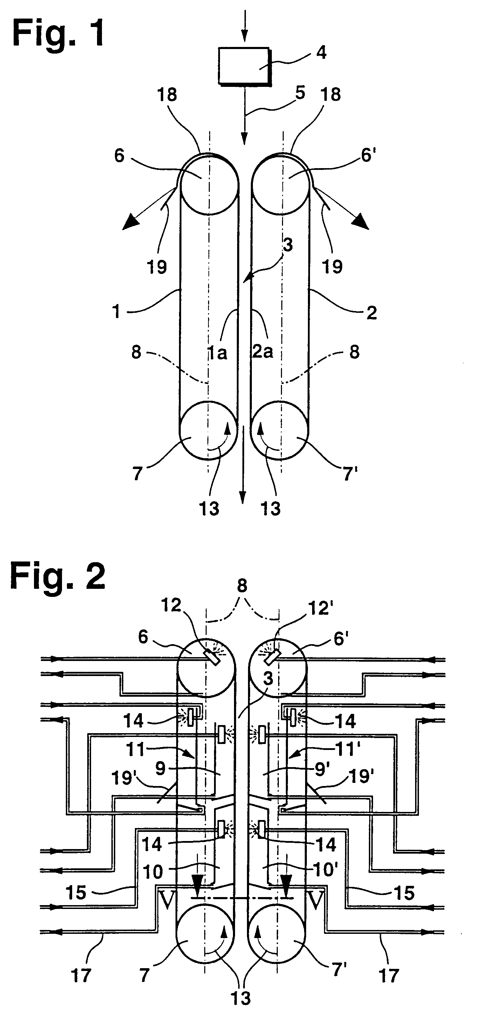

In der Fig. 1 ist schematisch eine aus zwei endlosen umlaufenden Metallbändern, insbesondere Stahlbändern (1 und 2) bestehende Einrichtung gezeigt, die zur Stofftrennung durch Kristallisation von Schmelzen dient. Die beiden umlaufenden Bänder (1 und 2) bilden zwischen ihren beiden einander zugewandten Trums (1a und 2a) einen Spalt (3), in den von einer Zuführeinrichtung (4) aus eine Schmelze mit einer bestimmten Temperatur im Sinn des Pfeiles (5) von oben her eingeführt wird. Die Bänder (1 und 2) sind jeweils um Umlenktrommeln (6 und 7, bzw. 6' und 7') geführt, die beim Ausführungsbeispiel jeweils gleich groß sind. Die Verbindungsgerade (8) jeweils zwischen den Rotationsachsen der Trommeln (6, 7, 6', 7') laufen daher etwa parallel zueinander. Nicht gezeigt ist ein Traggestell, in dem die Umlenkrollen (6, 6', 7, 7') mit den dazugehörigen Bändern (1 und 2) gelagert sind, und nicht gezeigt ist auch die Verschiebbarkeit der Achsen dieser Umlenktrommeln, die so gewählt ist, daß die beiden Verbindungsgeraden (8) nicht nur exakt parallel zueinander, sondern auch unter einem bestimmten kleinen Winkel zueinander geneigt sein können, dessen Scheitel unterhalb der beiden unteren Umlenktrommeln (7, 7') liegt. Die beiden Bänder (1 und 2) können daher mit ihren einander zugewandten Trums (1a, 2a) auch einen leicht keilförmigen Spalt bilden, der sich nach oben zur Zuführöffnung (4) hin etwas öffnet.

Wie aus Fig. 2 hervorgeht, sind sowohl im Inneren der hohl ausgebildeten Umlenktrommeln (6, 6', 7, 7') als auch im Inneren der umlaufenden Schlaufen der Bänder (1 und 2) Kühleinrichtungen (9, 10, 9', 10' und 11, 11' bzw. 12, 12') angeordnet. In der mit den Pfeilen (13) jeweils angedeuteten Bandlaufrichtung, die so gewählt ist, daß die beiden inneren Trums (1a und 2a) jeweils in derselben Richtung und entgegen der Zuführrichtung (5) der Schmelze bewegt werden, ist als erstes jeweils auf der Innenseite, die den Spalt (3) zugewandt ist, eine Kühleinrichtung (10 bzw. 10') vorgesehen, die aus Sprühdüsen (14) aufgebaut ist, welche innerhalb einer Kammer angeordnet sind und ein Kühlmittel auf die Innenseite des Trums (1a bzw. 2a) sprühen, das innerhalb der dicht an der Innenseite der Bänder anliegenden Kammern gesammelt und z.B. im Kreislauf wieder zurückgeführt wird. Die Sprühdüsen (14) werden dabei über Versorgungsleitungen (15) mit unter Druck stehenden Sprühmittel beaufschlagt. Das rückfließende Kühlmittel wird über Leitungen (17) wieder zurückgeführt. Gleiches gilt für die den anderen Kühleinrichtungen (9, 9' und 11, 11' bzw. 12, 12') zugeordneten Sprühdüsen. Die Rückführung von Kühlmittel aus den Hohlwalzen (6, 6') erfolgt im unteren seitlichen Bereich der Walzen (6, 6').

Durch die Anordnung der beiden Kühleinrichtungen wird es möglich, die Trums (1a und 2a) in ihrer Bewegungsrichtung unterschiedlich zu kühlen. Natürlich können auch noch mehrere Kühlzonen vorgesehen werden. Dies kann für eine gezielte Kristallbildung vorteilhaft ausgenützt werden.

Gleiches gilt für die zusätzlichen Kühleinrichtungen (12, 12') innerhalb der Umlenktrommeln (6, 6').

Neben der Möglichkeit der unterschiedlichen Kühlung der Bänder (1, 2) in ihrer Bewegungsrichtung ist es natürlich auch möglich, die Geschwindigkeiten der beiden Bänder (1 und 2) unterschiedlich zu wählen, so daß beispielsweise das linke Band (1) schneller als das rechte Band (2) läuft. Die Kristallbildung kann durch die unterschiedlichen Kristallbildungszeiten und/oder durch die unterschiedliche Temperierung beeinflußt werden.

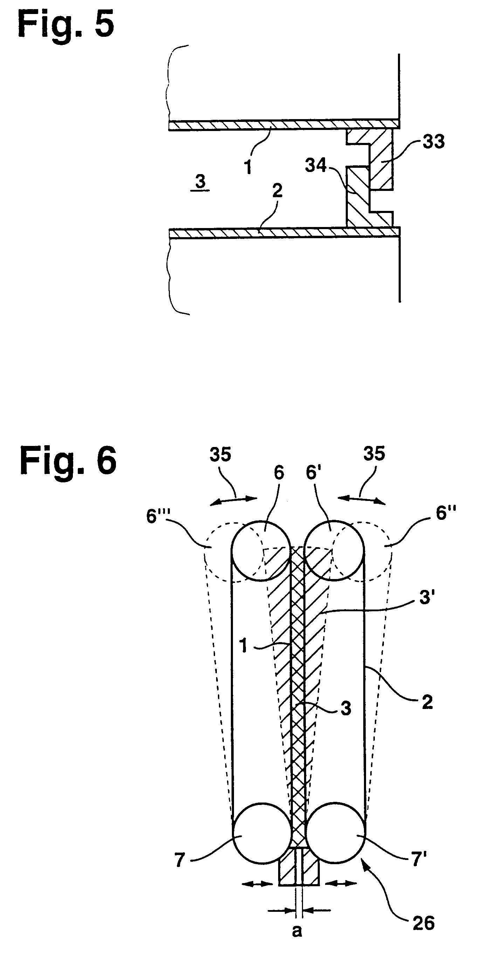

Bei dem erfindungsgemäßen Verfahren bilden sich durch die Kühlung der inneren Trums (1a und 2a) an den Bändern (1 und 2) im Bereich des Spaltes jeweils Kristallschichten, deren Dicke in der Bewegungsrichtung (13) der Bänder zunimmt. Je nach der Dicke der zu erwartenden Kristallschichten im Bereich der Umlenktrommeln (6 und 6') kann man, um ein Zuwachsen des Spaltes (3) an der Zuführstelle zu vermeiden, daher die Achsen (8, 8') der beiden Bänder (1 und 2) in der vorher erwähnten Weise unter einem Winkel einstellen, so daß trotz der Bildung von Kristallschichten eine ausreichende Menge an Schmelze zugeführt werden kann. Diese Verstellmöglichkeit erlaub es auch, das Volumen der Schmelze in Spalt (3) zu verändern. Hierauf wird bei der Erläuterung der Figur 6 noch eingegangen werden.

Die Kristallschichten (18) (Fig. 1) können durch Schaber (19) im Bereich der Umlenkwalzen (6, 6') abgenommen werden. Fig. 2 zeigt aber, daß es auch möglich ist solche Schaber (19) weiter nach unten zu verlegen, um beispielsweise durch die beiden Temperiereinrichtungen (11, 11'), welche die Außenseiten der Bänder (1 und 2) beeinflussen können, das Kristallisat auch noch einem gewissen Schwitz- bzw. Waschvorgang unterwerfen zu können, ehe es abgenommen wird.

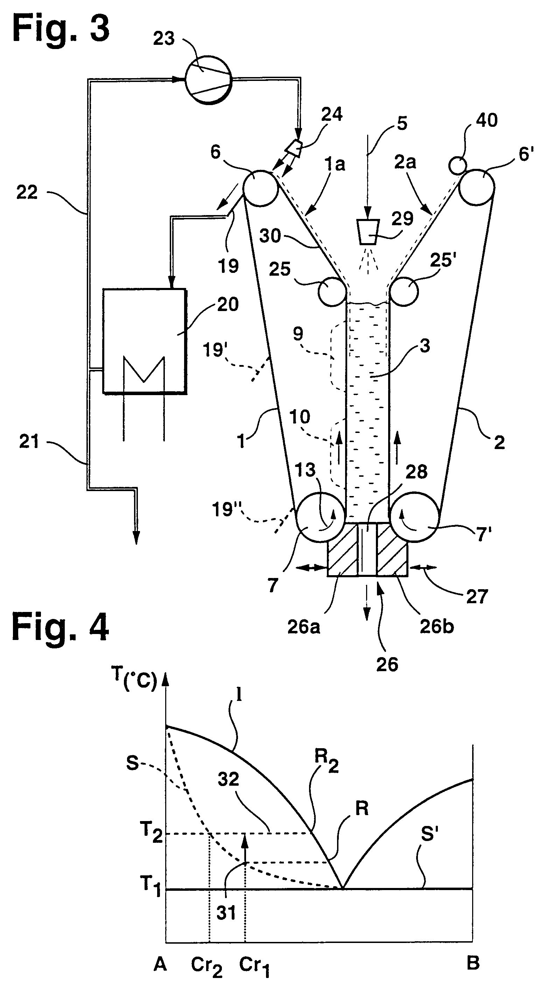

Die Figur 3 zeigt eine Variante einer erfindungsgemäßen Vorrichtung insofern, als hier die beiden endlosen Bänder (1) und (2) jeweils über drei Umlenkrollen (6, 7 und 25) bzw. (6', 7' und 25') geführt sind. Dadurch ergibt sich vor dem Einlaufbereich des Spaltes (3), in dem die einander zugewandten Trums der Bänder 1 und 2 im wesentlichen parallel zueinander laufen, jeweils ein vorgeschalteter Bandabschnitt (1a) bzw. (2a), der nicht senkrecht sondern schräg nach oben verläuft. Dieser Abschnitt kann für das sogenannte Waschen des Kristallisats benutzt werden, wie noch erläutert werden wird. Natürlich kann dieser Bereich auch beheizt werden, so daß er für das sogenannte "Schwitzen" ausgenutzt werden kann.

Bei der Ausführungsform der Figur 3 ist der Auslaufquerschnitt des Spaltes 3 durch eine Drosseleinrichtung (26) verschlossen, die beim Ausführungsbeispiel aus zwei dicht jeweils an der unteren Umlenktrommel (7) bzw. (7') anliegenden und zwei gegenüber diesen anliegenden Teilen in Richtung der Pfeile (27) verschiebbaren Teilen (26a) und (26b) besteht, mit deren Hilfe die Breite der spaltartigen Austrittsöffnung (28) eingestellt werden kann. Die Zufuhr der Schmelze erfolgt im Sinn des Pfeiles (5) über eine Aufgabeeinrichtung (29). Die Zufuhr von Schmelze muß natürlich mit dem Abfluß durch die Öffnung (28) so abgestimmt sein, daß der Raum innerhalb des Spaltes (3) ausreichend mit Schmelze gefüllt ist und nicht überläuft. Durch die Einstellung der Größe des Abflußspaltes (28) läßt sich jedoch - auch in Abhängigkeit vom Volumen der Schmelze im Spalt (3) - die Verweilzeit der Schmelze innerhalb des Spaltes (3) einstellen, was wiederum zusammen mit den vorgesehenen Kühlmöglichkeiten durch die Einrichtungen (9) und (10) (die natürlich innerhalb des Bandes (2) in gleicher Weise vorgesehen sind, wie innerhalb des Bandes (1)) den Kristallbildungsprozess beeinflussen kann.

Beim Ausführungsbeispiel wächst an der Außenseite beider Bänder (1) und (2) im Bereich des Spaltes (3) eine Kristallschicht (30) an, die, wie gestrichelt angedeutet ist, über den schrägen Abschnitt (1a) (analog über den Abschnitt 2a) nach oben befördert wird. Diese Kristallschicht (30) befindet sich dabei in einem Bereich außerhalb des Spaltes (3) und damit auch außerhalb der Schmelze. Es wird nun möglich, wie Figur 3 auch zeigt, an der Umlenktrommel (6) einen Schaber (19) oder dergleichen anzusetzen und das am Band (1) haftende Kristallisat abzunehmen und einem aufheizbaren Behälter (20) zuzuführen. Von diesem Behälter (20) aus kann nun wiederum geschmolzenes Kristallisat mit einer höheren Temperatur als vorher entweder durch die Leitung (21) als Fertigprodukt abgenommen werden, oder durch eine Leitung (22) und eine Pumpe (23) einem Sprühkopf (24) zugeleitet werden, von wo aus die Kristallschicht (30) auf dem Bandabschnitt (1a) mit der Schmelze aus dem Kristallisat selbst "gewaschen" werden kann.

Fig. 3 zeigt an dem rechten Band (2) beispielsweise, daß es auch möglich ist, dem oberen, schräg verlaufenden Bandabschnitt (2a) nicht nur Einrichtungen zum "Waschen" zuzuordnen, sondern daß man auch z.B. eine Abpreßwalze (40) und - nicht gezeigte - Heizeinrichtungen so anordnen kann, daß das mit dem Abschnitt (2a) geförderte Kristallisat zum "Schwitzen" kommt und der abgeschwitzte Bestandteil von der Abpreßwalze (40) abgedrückt werden kann und in den Spalt (3) zurückläuft. Das gewonnene Kristallisat kann daher vor der Entnahme noch gereinigt und von unerwünschten Bestandteilen befreit werden.

Dabei geschieht in an sich bekannter Weise das in Figur 4 Dargestellte. In Figur 4 sind die Zustandsgrößen der beiden Stoffe A und B und ihr eutektisches Verhalten in Abhängigkeit von der Temperatur dargestellt; "l" bezeichnet dabei den Verlauf der flüssigen Phase, "s" den Verlauf der festen Phase des Stoffes A, dessen Konzentration am linken Ende des Diagrammes 100% und am rechten Ende (bei B) 0% betragen soll (praktische Soliduslinie). Die theroretische Soliduslinie ist mit S' angezeichnet. Wird daher durch die Kühleinrichtungen (9) und (10) die Temperatur der Schmelze im Spalt (3) beispielsweise auf die Temperatur (T₁) gebracht, dann entsteht im Punkt (31) aus der Schmelze Kristallisat, das mit Cr₁ bezeichnet ist und das eine bestimmte Reinheit (des Stoffes A) aufweist. Gleichzeitig verbleiben die mit R bezeichneten flüssigen Rücklaufbestandteile, die im Spalt (3) senkrecht abgeführt werden und den Spalt (3) durch die Öffnung (28) verlassen können.

Wird nun das Kristallisat mit der Konzentration (Cr₁) bei (19) abgenommen und auf die Temperatur (T₂) gebracht, dann wird im Diagramm der Figur 4 die horizontale Linie (32) erreicht, die zu einem Kristallisat mit der Konzentration (Cr₂) und zu einem entsprechenden Rücklauf (R₂) führt. Das Kristallisat mit der Konzentration (Tr₂) ist reiner als das vorher gewonnene Produkt. Durch den Waschvorgang, der mit der Einrichtung der Figur 3 durchgeführt werden kann, läßt sich daher ein reineres Kristallisat gewinnen.

Aus der Figur 5 wird erkennbar, wie die seitliche Abdichtung der beiden parallel zueinander verlaufenden Bänder (1) und (2) zweckmäßig vorgenommen werden kann, um ein Herauslaufen der Schmelze an den beiden Seitenkanten der Bänder (1) und (2) zu verhindern. Beiden Bändern sind winkelförmige Abdichtleisten (33) bzw. (34) zugeordnet und zwar so, daß jeweils ein Schenkel dieser Winkelleisten (33) bzw. (34) zur dichten Anlage am anderen Schenkel kommt. Diese Dichtleisten (33) und (34) sind teleskopartig gegeneinander verschiebbar. Sie lassen daher auch eine gewisse Vergrößerung des Querschnittes des Spaltes (3) zu, die beispielsweise durch eine Veränderung des Abstandes der Drehachsen der Walzen (6, 6') einerseits und der Umlenkwalzen (7, 7') andererseits erzielbar ist. Natürlich wäre es auch möglich, durch eine Gegeneinanderverstellung der Umlenkwalzen (7) und (7') die Größe des Auslaufspaltes einzustellen. Die in Figur 3 vorgesehene Drosselvorrichtung (26) erlaubt aber eine wesentlich feinere Einstellung des Austrittquerschnittes.

Die Figur 6 zeigt schließlich noch die Möglichkeit der Einstellung der Größe des Spaltes (3) mit dem Ziel, auch das Volumen des Spaltes (3) zu verändern.

Figur 6 macht deutlich, daß durch eine seitliche Verschwenkung der Umlenkwalzen (6) und (6') im Sinn der Pfeile (35) jeweils um die Achsen der unteren Umlenkwalzen (7) bzw. (7') der zunächst mit parallelen Wänden (die einander zugewandten Trums der Bänder (1) und (2)) versehene Spalt (3) einen sich nach oben erweiternden keilförmigen Querschnitt erhält, der von dem dann entstandenen Keilspalt (3') gebildet wird. Dieser Keilspalt (3') weist ein wesentlich höheres Volumen auf als der Spalt (3). Durch die gegenseitige Verschwenkung der Bänder (1) und (2) läßt sich daher ein Einfluß auf das Volumen der Schmelze im Spalt (3, 3') erzielen. Da die Verweilzeit des Produktes 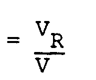 ist, wobei V_{R} das Volumen im Spalt (3, 3')
und V die Ausflußgeschwindigkeit im Querschnitt (28) ist, läßt sich sowohl durch die Verschwenkung der Bänder (1) und (2) im Sinn der Figur 6 als auch durch die Einstellung der Größe des Austrittsquerschnittes (28) die Verweilzeit des Produktes beeinflussen. Hierüber wiederum kann ein erzielter und erwünschter Einfluß auf die Kristallisatbildung genommen werden.

Die Vorrichtungen nach der Erfindung weisen alle, wegen der im wesentlichen senkrecht stehenden Bänder den Vorteil eines verhältnismäßig geringen Raumbedarfs an ihrer Grundfläche auf. Sie benötigen daher eine kleinere Aufstellfläche.

## Patentansprüche

1. Verfahren zur Stofftrennung durch Kristallisation von Schmelzen, bei denen die Schmelze in den Spalt zwischen zwei sich gegenüberliegenden bewegten Wandungen eingebracht wird, die beide kühlbar sind, als Kristallisat an mindestens einer Wandung haften bleibt und mit dieser aus dem Spalt herausgefördert und abgenommen wird, dadurch gekennzeichnet, daß beide Wandungen gleichsinnig und im wesentlichen vertikal nach oben bewegt werden und daß die Schmelze gegenläufig zu der Bewegung der Wände mit dem daran haftenden Kristallisat von oben in den Spalt eingebracht wird.

2. Verfahren nach Anspruch 1, dadurch gekennzeichnet, daß die Wandungen mit unterschiedlicher Geschwindigkeit bewegt werden.

3. Verfahren nach Anspruch 1, dadurch gekennzeichnet, daß die Wandungen in der Bewegungsrichtung (13) einer unterschiedlichen Kühlung unterzogen werden.

4. Vorrichtung zur Durchführung des Verfahrens nach einem der Ansprüche 1 bis 3, gekennzeichnet durch zwei jeweils um Umlenktrommeln (6, 7, bzw. 6', 7') geführte endlose Bänder (1, 2), insbesondere aus Metall, deren einander zugewandte Trums (1a, 2a) etwa vertikal verlaufen und den Spalt (3) bilden, durch Temperiereinrichtungen (9, 10, 11, 12, bzw. 9', 10', 11', 12'), die dem Spalt (3) und ggf. auch der von dem Spalt (3) abgewandten Innenseite der Bänder (1, 2) zugeordnet sind und durch eine am oberen Ende des Spaltes (3) angeordnete Zuführeinrichtung (4) für die Schmelze.

5. Vorrichtung nach Anspruch 4, dadurch gekennzeichnet, daß jede Temperiereinrichtung (9 bis 12, bzw. 9' bis 12') aus an der Innenseite der Bänder anliegenden Kammern (16) besteht, die mit Sprühdüsen (14) für das Aufsprühen einer Kühlflüssigkeit versehen sind.

6. Vorrichtung nach Anspruch 4, dadurch gekennzeichnet, daß der von dem Spalt (3) abgewandten Außenseite der Bänder (1, 2) Abhanmeeinrichtungen (19) für das Kristallisat zugeordnet sind.

7. Vorrichtung nach Anspruch 6, dadurch gekennzeichnet, daß als Abnahmeeinrichtungen Schaber (19, 19', 19'') vorgesehen sind.

8. Vorrichtung nach Anspruch 4, dadurch gekennzeichnet, daß die Umlenktrommeln (6, 6') für die Bänder (1, 2) hohl und ebenfalls mit je einer Temperiereinrichtung (12') versehen sind.

9. Vorrichtung nach Anspruch 4, dadurch gekennzeichnet, daß die Umlenktrommeln (6, 7, bzw. 6', 7') in einem Traggestell so angeordnet sind, daß die einander zugewandten Trums (1a, 2a) der Bänder (1, 2) zur Erstellung des Volumens im Spalt unter einem geringen Winkel zueinander einstellbar sind, dessen Scheitel unterhalb des Spaltes (3) liegt.

10. Vorrichtung nach Anspruch 4, dadurch gekennzeichnet, daß das untere Ende des Spaltes (3) durch eine den Abfluß bestimmende Drosseleinrichtung (26) abgeschlossen ist.

11. Vorrichtung nach Anspruch (10) dadurch gekennzeichnet, daß die Drosseleinrichtung (26) mit verschiebbaren Abschnitten (26a) und (26b) versehen ist, die einen zwischen sich befindlichen Kanalquerschnitt (28) verengen oder erweitern können.

12. Vorrichtung nach Anspruch 4, gekennzeichnet durch am oberen Ende des Spaltes (3) vorgesehene Bandabschnitte (1a, 2a), deren Oberflächen von der Vertikalen abweichend nach außen verlaufen und daß diesen Abschnitten (1a, 2a) Einrichtungen (24) zum Besprühen mit einer flüssigen Phase des gewonnenen Kristallisats zugeordnet sind.

13. Vorrichtung nach Anspruch 12, dadurch gekennzeichnet, daß die Abschnitte (1a, 2a) durch die Anordnung einer zusätzlichen Umlenkwalze (25, 25') jeweils am inneren Trum der Bänder (1) bzw. (2) und durch einen entsprechenden Versatz der äußeren Umlenkwalzen (6, 6') gegenüber diesen Umlenkwalzen (25, 25') gebildet sind.

14. Vorrichtung nach Anspruch 12, dadurch gekennzeichnet, daß die flüssige Phase des Kristallisats durch Entnahme des Kristallisats im Bereich der oberen Umlenkwalzen (6, 6') und durch Rückerwärmung und Rückführung der flüssigen Phase über eine Pumpe (23) erreicht wird.

15. Vorrichtung nach Anspruch 12, dadurch gekennzeichnet, daß dem obersten Bereich der Abschnitte (1a, 2a) mindestens eine Heizeinrichtung und mindestens eine Abpreßwalze (40) zugeordnet sind, mit deren Hilfe die abgeschwitzten Bestandteile von Kristallisat abgedrückt werden können.

## Claims

1. A method of separating substances by crystallising fused substances, whereby the fused substances are introduced into the gap between two oppositely lying, conveyed walls, both of which can be cooled, they remain adhered to at least one wall in the form of a crystalline substance and are conveyed therewith out from the gap and detached, characterised in that the two walls are moved in the same direction and essentially vertically upwards and the fused substances are introduced into the gap from above counter to the movement of the walls with the crystalline substance adhered thereto.

2. A method as claimed in claim 1, characterised in that the walls are moved at differing speeds.

3. A method as claimed in claim 1, characterised in that the walls are subjected to a differing degree of cooling in the direction of movement (13).

4. A device for implementing the method as claimed in one of claims 1 to 3, characterised by two endless belts (1, 2) fed respectively over pulley drums (6, 7, and 6', 7'), in particular made from metal, whose bands (1a, 2a) facing one another extend approximately vertically to form the gap (3), by heating mechanisms (9, 10, 11, 12, and 9', 10', 11', 12') assigned to co-operate with the gap (3) and, as required, also the inner face of the belts (1, 2) facing away from the gap (3) and by an in-feed mechanism (4) for the fused substances arranged at the top end of the gap (3).

5. A device as claimed in claim 4, characterised in that each heating device (9 to 12, and 9' to 12') consists of chambers (16) adjoining the inner face of the belts and is provided with spray nozzles (14) for applying a spray of cooling liquid.

6. A device as claimed in claim 4, characterised in that the outer face of the belts (1, 2) facing away from the gap (3) operate in conjunction with detaching mechanisms (19) for the crystalline substance.

7. A device as claimed in claim 6, characterised in that scrapers (19, 19', 19'') are provided as the detaching mechanisms.

8. A device as claimed in claim 4, characterised in that the pulley drums (6, 6') for the belts (1, 2) are hollow and each is provided with a tempering mechanism (12').

9. A device as claimed in claim 4, characterised in that the pulley drums (6, 7, and 6', 7') are so arranged in a bearing frame that the bands (1a, 2a) of the belts (1, 2) facing one another can be adjusted relative to one another by a slight angle in order to regulate the volume in the gap and the apex thereof lies below the gap (3).

10. A device as claimed in claim 4, characterised in that the bottom end of the gap (3) is closed off by means of a restrictor mechanism (26) which determines the discharge.

11. A device as claimed in claim 10, characterised in that the restrictor mechanism (26) is provided with slidable portions (26a) and (26b), which can be used to narrow or widen a passage cross-section (28) arranged between them.

12. A device as claimed in claim 4, characterised by belt portions (1a, 2a) provided at the top end of the gap (3), the surfaces of which extend deflecting out from the vertical, and mechanisms (24) for applying a spray of liquid phase to the crystalline substance produced are assigned to these portions (1a, 2a).

13. A device as claimed in claim 12, characterised in that the portions (1a, 2a) are formed by providing additional pulley rollers (25, 25') arranged respectively at the inner end of the belts (1) or (2) and by means of a corresponding offset positioning of the outer pulley rollers (6, 6') relative to these pulley rollers (25, 25').

14. A device as claimed in claim 12, characterised in that the liquid phase of the crystalline substance is obtained by removing the crystalline substance in the region of the upper pulley roller (6, 6') and re-heating and re-introducing the liquid phase by means of a pump (23).

15. A device as claimed in claim 12, characterised in that the uppermost region of the portions (1a, 2a) co-operate with at least one heating mechanism and at least one press roll (40), with the aid of which the condensates of crystalline substance can be pushed off.

## Revendications

1. Procédé de séparation de matière par cristallisation de fontes, dans lesquels la fonte est amenée dans la fente entre deux parois mobiles se faisant face, qui sont toutes deux refroidissables, reste collée à au moins une des parois sous forme de matière cristallisée et, avec celle-ci, est transportée et prélevée hors de la fente, caractérisé en ce que les deux parois se déplacent dans le même sens et pratiquement verticalement vers le haut, et en ce que la fonte est amenée, en sens inverse du mouvement des parois, avec la matière cristallisée adhérant à elles, à partir du haut dans la fente.

2. Procédé selon la revendication 1, caractérisé en ce que les parois se déplacent à des vitesses différentes.

3. Procédé selon la revendication 1, caractérisé en ce que les parois sont soumises à un refroidissement différencié le long de la direction du mouvement (13).

4. Dispositif pour la réalisation du procédé selon une des revendications 1 à 3, caractérisé par deux bandes sans fin (1, resp. 2), en particulier en métal, guidées autour de poulies de renvoi (6, 7, resp. 6', 7'), les brins se faisant face (1a, resp. 2a) des bandes (1, resp. 2) se déplaçant de façon approximativement verticale et formant la fente (3), et par des dispositifs de réglage de la température (9, 10, 11, 12, resp. 9', 10', 11', 12'), qui sont affectés à la fente (3) et le cas échéant, aussi aux faces internes des bandes (1, resp. 2) tournant le dos à la fente (3), et par un dispositif d'admission (4) pour la fonte, disposé à l'extrémité supérieure de la fente (3).

5. Dispositif selon la revendication 4, caractérisé en ce que chaque dispositif de réglage de la température (9 à 12, resp. 9' à 12') est constitué de logements (16) situés sur les faces internes des bandes, qui sont équipés de buses de pulvérisation (14) pour la pulvérisation d'un fluide de refroidissement.

6. Dispositif selon la revendication 4, caractérisé en ce que les faces externes des bandes (1, 2) tournant le dos à la fente (3) comportent des dispositifs de prélèvement (19) de la matière cristallisée.

7. Dispositif selon la revendication 6, caractérisé en ce que, comme dispositifs de prélèvement, on a prévu des racloirs (19, 19', 19'').

8. Dispositif selon la revendication 4, caractérisé en ce que les poulies de renvoi (6, 6') pour les bandes (1, 2) sont creuses et également équipées chacune d'un dispositif de réglage de la température (12').

9. Dispositif selon la revendication 4, caractérisé en ce que les poulies de renvoi (6, 7, resp. 6', 7') sont disposées dans un châssis support, de manière à ce que les brins se faisant face (1a, 2a) des bandes (1, 2) soient ajustables l'un par rapport à l'autre avec un angle faible, dont le sommet se situe au-dessous de la fente (3), de façon à former le volume de la fente.

10. Dispositif selon la revendication 4, caractérisé en ce que l'extrémité inférieure de la fente (3) se termine par un dispositif d'étranglement (26) qui détermine le débit de sortie.

11. Dispositif selon la revendication 10, caractérisé en ce que le dispositif d'étranglement (26) est équipé de segments déplaçables (26a) et (26b), qui peuvent réduire ou élargir une section de canal se trouvant entre eux.

12. Dispositif selon la revendication 4, caractérisé par des segments de bande (1a, 2a), prévus à l'extrémité supérieure de la fente (3), dont les surfaces supérieures s'écartant de la verticale se déplacent vers l'extérieur, et caractérisé en ce que ces segments (1a, 2a) comportent des dispositifs (24) pour la pulvérisation avec une phase fluide de la matière cristallisée récupérée.

13. Dispositif selon la revendication 12, caractérisé en ce que les segments de bande (1a, resp. 2a) sont formés au moyen d'un cylindre de renvoi supplémentaire (25, resp. 25') disposé sur le brin interne des bandes (1, resp. 2), et par un déport correspondant des cylindres de renvoi externes (6, 6') par rapport à ces cylindres de renvoi (25, 25').

14. Dispositif selon la revendication 12, caractérisé en ce que la phase fluide de la matière cristallisée est obtenue par prélèvement de la matière cristallisée dans la zone des cylindres de renvoi supérieurs (6, 6'), et par réchauffage et recyclage de la phase fluide par l'intermédiaire d'une pompe (23).

15. Dispositif selon la revendication 12, caractérisé en ce que la zone la plus élevée des segments (1a, 2a) comporte au moins un dispositif de chauffage et au moins un cylindre d'extraction par pression (40), à l'aide desquels les composants exsudés de la matière cristallisée peuvent être exprimés.
